# EUROPEAN PATENT SPECIFICATION

(11) **EP 4 133 947 B1**
(45) Date of publication and mention of the grant of the patent: **19.07.2023**
(21) Application number: 21193212.4
(22) Date of filing: 26.08.2021
(51) Int. Cl.: A23K 10/10, A23K 10/16, A23K 10/26, A23K 10/30, A23K 40/30, A23K 50/40, A23K 20/24, A23K 20/28

(54) **METHOD FOR PREPARING ORGANIC COATED FEED FOR PET USING CLAY MINERAL AND ORGANIC MATTER**
VERFAHREN ZUR HERSTELLUNG VON ORGANISCHEM BESCHICHTETEM FUTTER FÜR HAUSTIERE UNTER VERWENDUNG VON TONMINERAL UND ORGANISCHEM MATERIAL
PROCÉDÉ DE PRÉPARATION D'ALIMENTS ORGANIQUES ENROBÉS POUR ANIMAUX DE COMPAGNIE UTILISANT UN MINÉRAL ARGILEUX ET DES MATIÈRES ORGANIQUES

(30) Priority: 13.08.2021 KR 20210107350
(43) Date of publication of application: 15.02.2023
(73) Proprietor: Macsumsuk GM Co., Ltd., Gyeongsangbuk-do 38911 (KR)
(72) Inventor: Kwak, Sung Gun, 38882 Yeongcheon-si (KR)
(74) Representative: Loo, Chi Ching

(56) References cited:
- WO-A1-2006/009354
- WO-A1-2010/146060
- KR-B1- 101 462 214
- KR-B1- 101 661 674

## Description

### BACKGROUND OF THE INVENTION

### Field of the Invention

The present invention relates to a method for preparing organic coated feed for pets using clay minerals, organic matter and the like.

### Description of the Related Art

Clay minerals refer to secondary minerals resynthesized during the process of soil formation, and various types thereof are formed depending on environmental conditions when synthesized. The clay minerals are mineral particles having a particle diameter of 0.002 mm or less, and it is known that spreading the surface area of fine particles of 1g results in an area as wide as a volleyball court (Hwang, 1997). Also, the clay minerals are used in the livestock industry to promote the growth of livestock, improve digestibility and feed efficiency, control moisture in livestock manure, remove odors, and improve milk quality.

In the meantime, as a technology for manufacturing pet food using these clay minerals, "A porous granule using a cracked egg, a clay mineral, and vegetable protein for pet feed or assorted feed supplement; and to a manufacturing method thereof" of Korean Patent Registration No. 10-1661674 (hereinafter referred to as "Patent Literature 1"), which has been applied and registered by the applicant of the present invention is disclosed.

Patent Literature 1 is characterized in that the powder obtained by grinding and calcining Macsumsuk is mixed with a cracked egg, a vegetable protein, and livestock blood to prepare a slurry, and granulating it in a granulator.

In Patent Literature 1, the cracked egg, the vegetable protein, and the livestock blood are used to supply protein and fat necessary for pets, and to improve porosity during feed production.

However, since the cracked egg and the livestock blood itself emits an undesirable odor and the pets usually live in the same room with peoples, they give off a bad odor to those living with them.

In addition, since the cracked egg and the livestock blood may contain bacteria, viruses, and other chemicals that can cause disease in animals, there is a problem in that people with high affection for pets lower their preference for raw materials.

### Patent Literature

Patent Literature 1: Korean Patent Registration No. 10-1661674 (September 26, 2016)

### SUMMARY OF THE INVENTION

The method for preparing organic coated feed for pets using clay minerals, organic matter and the like of the present invention is to solve the problems occurring in the prior art as described above, and is to provide feed with a decreased odor and high preference by the utilization of Macsumsuk and oriental medicine extracts.

The method of the present invention is intended to allow people living in the same living space as pets to hardly smell the unpleasant odor of feed.

According to an aspect of the invention to achieve the object described above, there is provided a method for preparing organic coated feed for pets using clay minerals and organic matter, which is a feed preparing method, as claimed in claim 1.

In the above configuration, the mineral powder may be prepared by 100 parts by weight, the shell powder may be mixed at 50 to 200 parts by weight with respect to 100 parts by weight of the mineral powder in the mixing step, magnesium may be mixed at 10 to 50 parts by weight with respect to 100 parts by weight of the mineral powder in the mixing step, rice bran may be mixed at 50 to 200 parts by weight with respect to 100 parts by weight of the mineral powder in the mixing step, rice germ may be mixed at 20 to 70 parts by weight with respect to 100 parts by weight of the mineral powder in the mixing step, the oriental medicine extract may be mixed at 10 to 20 parts by weight with respect to 100 parts by weight of the mineral powder in the mixing step.

In addition, the fluid colloidal slurry prepared in the mixing step may be sprayed into a granulator through a nozzle at an injection pressure of 14.0 to 20.0 kg/cm² to mold granules having an average particle size of 0.1 to 4 mm in the molding step.

In addition, the oriental medicine extract may be prepared by mixing *Glycyrrhiza uralensis*, *Sophora flavescens*, and *Morus alba* leaf powders together at a weight ratio of 1:1:2, then adding water in an amount to be 2 to 3 times the weight of the mixture, heating the resultant mixture for 6 hours, and removing solid matter.

Moreover, the water added may be a fermentation broth prepared through: a blanching step of mixing leaves of *Solanum melongena* with water, blanching the leaves of *Solanum melongena,* and separating solid matter to obtain a primary liquid phase; a primary immersion step of adding leaves of *Youngia japonica* and leaves of *Erigeron annuus* to the primary liquid phase, performing immersion at room temperature for 120 minutes, and separating solid matter to obtain a secondary liquid phase; and a fermentation step of fermenting the secondary liquid phase at a low temperature for 36 to 48 hours to prepare a fermentation broth.

In the meantime, it should be understood that the terminology or the words used in claims should not be interpreted in normally or lexically sense. It should be interpreted as meaning and concept consistent with the technical idea of the present invention, based on the principle that the inventor can properly define the concept of the term in order to describe its invention in the best way.

Therefore, the embodiments described in the present specification and the configurations shown in the drawings are only the most preferred embodiments of the present invention, and not all the technical ideas of the present invention are described. Therefore, it is to be understood that various equivalents and modifications are possible.

### BRIEF DESCRIPTION OF THE DRAWINGS

The above and other objects, features and advantages of the present invention will be more apparent from the following detailed description taken in conjunction with the accompanying drawings, in which:
FIG. 1 is a graph illustrating an emissivity of far-infrared radiation of Macsumsuk which is a raw material of the present invention;
FIG. 2 is a table and graph illustrating the results of a far-infrared spectroscopic distribution test of Macsumsuk;
FIG. 3 is a photomicrograph illustrating granules prepared by a manufacturing method of the present invention; and
FIG. 4 is a cross-sectional photograph of granules prepared by the present invention.

### DETAILED DESCRIPTION OF THE PREFERRED EMBODIMENT

Hereinafter, the method for preparing organic coated feed for pets using clay minerals, organic matter and the like of the present invention will be described in detail.

### 1. Mineral pretreatment step

A clay mineral including Macsumsuk is prepared, ground, and fired to prepare mineral powder.

More specifically, Macsumsuk raw ore is prepared and ground, and the powder is heated at a temperature of 800°C to 1 ,100°C to prepare 100 parts by weight of fired power.

In the case of additionally preparing bentonite, bentonite is prepared by 5 to 50 parts by weight with respect to 100 parts by weight of Macsumsuk powder, and fired (heated) at a temperature of 100°C to 400°C. Zeolite is prepared by 5 to 50 parts by weight with respect to the weight of Macsumsuk, and the Macsumsuk powder, bentonite, and zeolite are mixed together at 100°C to 600°C to prepare mineral powder.

At this time, the content of bentonite or zeolite is most preferably 25 parts by weight.

When bentonite or zeolite exceeds the above range, the hardening of granules is severe and the granules may be crashed like powder. On the other hand, when bentonite or zeolite is added in a small amount, the granules do not have sufficient hardness and are soft so that the internal hollow deformation by external pressure occurs too easily.

Clay minerals are a general term for soil minerals composed of extremely fine mineral particles, which are mainly secondary products and form the clay part of the soil. Clay minerals are produced from soil or rocks subjected to weathering, and from sediments such as volcanic ash or sedimentary rocks in regions where volcanic belts have developed.

The major clay minerals include kaolin-based minerals such as kaolinite, dickite, and halloysite; montmorillonite-based minerals such as montmorillonite, bentonite, and acid clay; micas such as illite, zeolite, and glauconite, kaolin, chlorite group, alpophan, Macsumsuk and the like.

In the present invention, Macsumsuk is contained among various clay minerals.

Macsumsuk is composed of components as presented in Table 1 below, is a rock belonging to the quartz porphyry among the igneous rocks, and is easily weathered and brittle overall. In particular, white feldspar is often kaolinized, and biotite is almost oxidized and scattered in the form of iron oxide. Macsumsuk contains a large amount of hornblende, and is known to have a positive effect on living things since Macsumsuk contains a large amount of zircon and radiates α-rays.

**[Table 1]**

| Component name | Content (wt%) |
|---|---|
| Silicon dioxide (SiO₂) | 65.80 to 71.80 |
| Aluminum oxide (Al₂O₃) | 10.99 to 14.99 |
| Iron oxide (Fe₂O₃) | 2.27 to 2.67 |
| Calcium oxide (CaO) | 1.79 to 2.19 |
| Magnesium oxide (MgO) | 0.46 to 0.66 |
| Potassium oxide (K₂O) | 3.50 to 5.50 |
| Sodium oxide (Na₂O) | 5.25 to 7.25 |
| Titanium dioxide (TO₂) | 0.21 to 0.25 |
| Phosphorus pentoxide (P₂O₅) | 0.05 to 0.07 |
| Manganese oxide (MnO) | 0.05 to 0.07 |
| Ignition loss | 1.89 to 2.29 |

The wavelengths radiated from Macsumsuk are in a range of 8 to 14 µm and are known as far-infrared rays in the wavelength band most beneficial to the living body. Far-infrared rays in this wavelength band are known to activate biological cells and promote animal metabolism. Focusing on the fact that the emissivity of far-infrared rays when Macsumsuk is finely powdered (1 to 6 µm) is higher than the emissivity of far-infrared rays when Macsumsuk in a rocky state, in the present invention, Macsumsuk is powdered, particularly is fired and powdered, then mixed with other raw materials, and processed into granules. The granules are used as a carrier for supporting and immobilizing nutrients and minerals necessary for pet feed. Macsumsuk has functions such as adsorption due to porosity and precipitation of minerals.

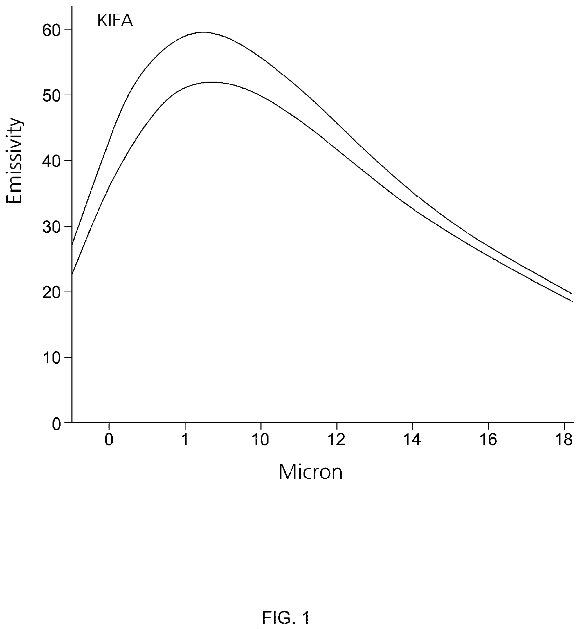

FIG. 1 illustrates a graph of the emissivity of far-infrared rays from Macsumsuk. The unit of emissivity in FIG. 1 is W/m²·µm based on measurement at 70°C, and it can be confirmed that Macsumsuk has a high emissivity of far-infrared rays as a black body. The graph of FIG. 1 is a result measured by the Korea Far Infrared Application & Evaluation Institute.

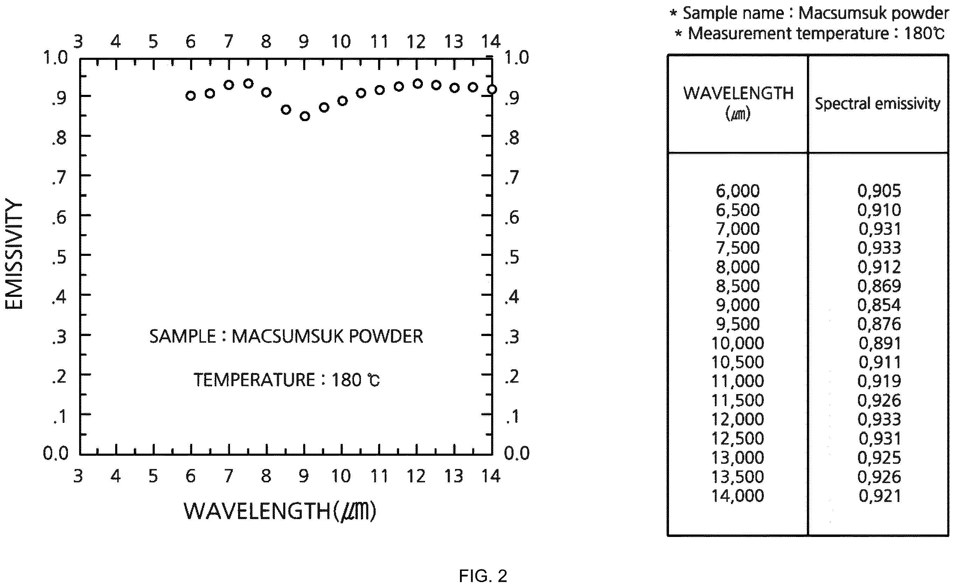

FIG. 2 is the result of a far-infrared spectral distribution test measured by the Korea Research Institute of Standards and Science, and illustrates the spectral distribution of Macsumsuk powder at 180°C in an environment having a temperature of 23±1°C and a relative humidity of 50%.

In the present invention, bentonite may be further contained among various clay minerals.

Bentonite contains minerals necessary for the growth of pets, exhibits expandability, and thus helps to improve digestibility and absorption by delaying the passage of feed.

In particular, bentonite exhibits excellent binding properties and thus serves to increase hardness when granulated feed is prepared.

At this time, the weight of bentonite may be widely selected in a range of 5 to 50 parts by weight with respect to 100 parts by weight of Macsumsuk, and zeolite may also be widely selected in a range of 5 to 50 parts by weight.

As other clay minerals, kaolin, elvan, and montmorillonite may be used.

### 2. Shell pretreatment step

Shells are prepared, washed, ground, and fired to prepare shell powder.

Various shells such as oyster shells and abalone shells may be used as shells.

Since shells contain a large amount of calcium, it is possible to obtain calcium powder with minimized contaminants when shells are washed, ground, and fired.

### 3. Mixing step

Magnesium, rice bran, rice germ, and an oriental medicine extract are prepared and mixed with the mineral powder and shell powder, and the resultant mixture is stirred to prepare a fluid colloidal slurry.

Magnesium is prepared by purchasing commercially available powdered products.

Rice bran is a destructed and ground mixture of seed coat, aleurone layer and the like, which are produced during the process of milling from brown rice to milled rice. Rice bran is a by-product of milled rice, but is a significantly nutritious material that contains 29% of the nutritional components of rice.

Rice bran contains various nutrients such as vitamin A, B1, B6, iron, phosphorus, and minerals.

It is known that the plant fiber of rice bran activates the action of intestine, and this promotes bowel movements.

Rice germ is a treasure house of nutrients, which contains 66% of the nutritional components of rice. Not only rice germ contains a variety of high-quality essential nutrients as compared to any other food, but also the amount of the nutrients contained in rice germ is dozens of times larger than the amount of the nutrients contained in milk and eggs, which are often called complete foods, and rice germ is thus said to be the healthiest food on earth.

Oriental medicine extracts are extracts obtained by boiling and extracting various herbal medicines used in the market, and liquid extracts are used if possible.

In the case of using a solid extract, an appropriate amount of water is added during mixing to prepare a slurry.

Raw materials for oriental medicine extracts include various well-known herbal medicines such as *Glycyrrhiza uralensis* root, *Sophora flavescens* root, *Angelica dahurica* root, *Liriope platyphylla* root, *Morus alba* bark, *Acanthopanax sessiliflorus Seem* bark, *Paeonia* root, *Rehmannia glutinosa* root, *Angelica gigas* root, *Ligusticum officinale* root, *Pleuropterus multiflorus TURCZ.* Root, *Astragalus propinquus* root, *Chrysanthemum indicum,* black soybean, *Pinus thunbergii* leaf, *Lycium chinense, Chrysanthemum zawadskii* var. *latilobum,* deer antler, green tea, peppermint, *Porica cocas, Saururus chinensis, Acorus gramineus Solander, Perilla frutescens var. acuta KUDO* leaf, *Portulaca oleracea, Artemisia princeps* leaf, *Houttuynia cordata, Panax ginseng, Platycladus orientalis* leaf, and *Eclipta prostrata,* and the oriental medicine extract may be prepared by boiling one or a mixture of these herbal medicines.

When the oriental medicine extract is prepared by mixing *Glycyrrhiza uralensis, Sophora flavescens,* and *Morus alba* leaf powders among these together at a weight ratio of 1:1:2, then adding water in an amount to be 2 to 3 times the weight of the mixture, heating the resultant mixture for 6 hours, and removing solid matter, the unpleasant odor may be diminished.

Licorice (*Glycyrrhiza uralensis*) belongs to *Leguminosae,* mainly scattered in China, Russia, Spain, Iran, Afghanistan and the like, has a columnar shape and does not branch, have a length of 1, a diameter of 0.53 to 3.00 cm, a dark brown outer surface, and wrinkles lengthwise. Licorice has a unique odor and sweet taste, a yellowish-brown cork layer exists in the transverse section, and a cork cortex composed of 1 to 3 cell layers exists inside the yellowish-brown cork layer. In the cortex, bast fiber bundles and crystal cell rows exist. Short and starchy granules exist in the parenchyma cells of the cortex and xylem. One with a hard texture, powdery property, and a yellowish-white cut section is a good product. Glucuronic acid, that is a decomposition product of glycyrrhizin contained in *Glycyrrhiza* family and is a component of licorice, binds to harmful substances in the liver of a living body and detoxifies as glucuronide, and also has an anti-allergic action and is thus applied in dermatology. Glycyrrhetinic acid, that is another decomposition product, has anti-inflammatory action and adrenocortical hormone action.

Shrubby sophora (*Sophora flavescens*) belongs to *Leguminosae,* and the root of *Sophora angustifolia S. et Z* is called Gosam. As plants belonging to the same genus as *Sophora flavescens,* there is *sophorae subprostratae radix.* Since the cork layer on the surface falls off when *sophorae subprostratae radix* is dried, and it is thus possible to distinguish *Sophora flavescens* and *sophorae subprostratae radix,* that are very similar in shape, from each other. Shrubby sophora has a columnar shape, a length of 5 to 20 cm, a diameter of 2 to 3 cm, a dark brown to yellowish brown color, and prominent wrinkles inside. Alkaloid, sophocarpine, flavone glycosides and the like are the main components of lenticel. In terms of pharmacological action, shrubby sophora inhibits the growth of various dermatomyces at 80% sap concentration. Shrubby sophora cures anger in the heart and its efficacy is similar to that of coptidis rhizoma. Shrubby sophora is known to have cooling, drying and wetting, blood-purifying, detoxifying, and insecticidal actions and thus to be effective in strengthening of stomach, antipyresis, diuresis, disinsection, and treatment of neuralgia.

A mulberry (*Morus alba*) leaf is a leaf of Moraceae family, and is also called frosted mulberry leaf, winter mulberry leaf, and twin mulberry leaf. The mulberry leaf is dried and thus brittle. When a mulberry leaf is immersed in water to restore its shape, the mulberry leaf is ovate or broad ovate, 8 to 15 cm long and 7 to 13 cm wide. The tip of the leaf is pointed, and the base of the leaf is heart-shaped. There are serrations on the edge of the leaf, and some of leaves are irregularly split. The upper surface of the leaf is yellow-green or light yellow-brown, and the lower surface has protruding veins, with hairs on the protruding veins. The mulberry leaf has almost no odor, and the taste thereof is dull but slightly bitter and astringent. The main components of the mulberry leaf are vitamin B12, A, carothin, ergosterol, flavone and the like. In terms of pharmacological action, the leaf extract of mulberry has a strong antibacterial action against typhoid bacteria *in vitro* and inhibits the growth of *staphylococcus.* In terms of pharmacological action, the mulberry leaf is known to be effective in strengthening of stomach and the treatment of headache, phlegm, expectoration, edema, abdominal pain, dysentery, and extravasated blood as antipyretic, antitussive, meridian point, and eye medicines.

When the above raw materials are used singly, the odor is bad and the taste is bitter. However, it is possible to diminish the unpleasant odor when an extract is prepared by mixing these three together and boiling the mixture and the extract is used as a raw material to be mixed in the preparation of feed.

At this time, the water added during boiling may be a fermentation broth prepared through a blanching step of mixing leaves of *Solanum melongena* with water, blanching the leaves of *Solanum melongena,* and separating solid matter to obtain a primary liquid phase; a primary immersion step of adding leaves of *Youngia japonica* and leaves of *Erigeron annuus* to the primary liquid phase, performing immersion at room temperature for 120 minutes, and separating solid matter to obtain a secondary liquid phase; and a fermentation step of fermenting the secondary liquid phase at a low temperature for 36 to 48 hours to prepare a fermentation broth.

When the fermentation broth is used instead of water, the odor suppressing effect is superior, and the unpleasant odor may be suppressed for a long time in a high humidity condition as well.

In the mixing step, it is preferable that the shell powder is mixed at 50 to 200 parts by weight, magnesium is mixed at 10 to 50 parts by weight, rice bran is mixed at 50 to 200 parts by weight, rice germ is mixed at 20 to 70 parts by weight, and the oriental medicine extract is mixed at 10 to 20 parts by weight based on 100 parts by weight of the mineral powder added.

In the mixing process, the time for stirring differs depending on the stirring speed, but at least 30 minutes or more is proper in the case of low-speed stirring and the time may be shortened in the case of high-speed stirring.

It is preferable that the prepared fluid colloidal slurry is ground while being mixed and stirred, then sufficiently aged, filtered through a sieve to remove foreign matter, and then subjected to the molding step.

In this mixing step, the mineral powder forms an aggregate by its own cohesive force, dispersion is not performed smoothly because of the electrostatic force of particles, and the mineral powder is likely to exist in the form of an aggregate.

When dispersion is not performed smoothly, the quality of the final product may decrease since the shape of the granules is crushed or bent after molding, and workability and stability may decrease.

In order to prevent this, a dispersant may be added.

A dispersant has functions of controlling the pH of slurry, controlling the charge of particles, and controlling dispersion and aggregation, and makes it possible to prepare suitable granules.

As the dispersant, an anionic dispersant that is a polymer-inorganic salt may be used. An anionic polycarboxylate dispersant does not contain ash, exhibits excellent dispersibility when the pH of slurry is about 6.0 to 10.0, and is thus suitable for preparation of a slurry having a high concentration of 30 to 60 wt%.

A more preferable amount of the dispersant used is 0.5 to 4 wt% of the solid weight of the completely prepared granules, and the amount is preferably about 1.5 to 3 wt%.

In order to increase the viscosity of the fluid colloidal slurry, a pH adjusting agent consisting of any one selected from an acid or a base may be added.

The initial fluid colloidal slurry has a pH of about 6.0 to 9.0, but the slurry settles when left for 1 hour or more, the slurry is solidified when left for a time longer than the time, and the slurry is required to be stirred or ground again.

When an acid and a base are added during grinding or mixing process, aggregation and coagulation may be prevented.

Nitric acid and the like may be used as the acid and base, and at this time, it is preferable to stir the slurry for 30 minutes or more and then to leave the slurry after the addition of acid and base for stabilization.

An acid and a base can be added in both the primary mixing step and the mixing step, but in order to prevent coagulation or aggregation during the mixing process of raw materials, it is preferable to add an acid and a base at the beginning of raw material mixing, and in particular, it is preferable to add an acid and a base before the use of dispersant.

When air bubbles are generated during the molding step, air bubbles not only interfere with molding but also adversely affect the quality.

Moreover, as foam is greatly generated when a dispersant is used, it is also important to remove and suppress the foam, and a defoaming agent may be added for this purpose.

The basic action of defoaming agent is to lower the surface tension of air bubbles, thus to assemble fine air bubbles, to form large air bubbles that easily float, to remove the air bubbles from the surface of slurry, to lower the surface viscosity of air bubbles, and thus to prevent the mixed air from becoming air bubbles.

As the defoaming agent, a solution type and an emulsion type may be used, and a silica silicone-based defoaming agent, a silicone-based defoaming agent and the like may be used.

The defoaming agent may be added before the addition of dispersant, before mixing and stirring, or during the stirring process to increase the grinding and dispersion efficiencies.

Meanwhile, an organic additive may be additionally added.

The organic additive is coated on the Macsumsuk particles to provide fluidity and maintain the strength of granules by serving as a lubricant during spray-drying molding.

Since the viscosity of aqueous solution and the strength of granules are different depending on the kind and amount of organic additive, the binder is required to be selected in consideration of the components and molding method of Macsumsuk.

The organic additive affects the strength of granules, and when a low-strength organic additive is used, the granules are easily deformed and there are disadvantages that the granules may be attached to the container and the like during handling.

It is preferable that the fluid colloidal slurry prepared by the above-described process preferably has a concentration of 30 to 50 wt%, a pH of 7.0 to 9.5, and a viscosity of 300 to 1,550 cps by the addition of water, an acid or a base, a dispersant and the like. In a state in which an organic additive and a defoaming agent are added, it is preferable that the fluid colloidal slurry has a concentration of 35 to 45 wt%, a pH of 7.0 to 9.5, and a viscosity of 350 to 1,350 cps.

### 4. Molding step

The fluid colloidal slurry prepared in the mixing step is sprayed into a granulator having an internal temperature of 130°C to 400°C at a high pressure to prepare granules having a hollow inside and a porous surface.

Factors affecting the shape, particle size and distribution of granule particles and the organization of granules include the concentration and viscosity of slurry, the degree of dispersion, the injection pressure and amount of slurry, the drying capacity and temperature of spray dryer, and the like. These parameters may vary depending on the structure and nozzle type of the spray dryer.

For example, the size of the drying bin is 10 m in height and 4 m in diameter, and the granulator consisting of a spray dryer that performs drying with LPG is designed to spray-dry the slurry by a co-current method using the pressure nozzle at the top and spray-dry the slurry by a counter-current method using the pressure nozzle installed at the bottom. In order to increase the retention time of particles sprayed inside the dryer so as to prepare granules having a diameter of about 0.1 to 4.0 mm in the spray dryer, a counter-current spray method using the pressure nozzle (inner diameter: 0.5 to 1.2 mm) at the bottom of the spray dryer may be used. The operating conditions of a typical spray dryer may be: a relatively high injection pressure of 14.0 to 20.0 kg/cm², a pressure nozzle inner diameter of 0.5 to 1.2 mm, an internal temperature of the spray dryer of 130°C to 400°C, and an outlet temperature of the spray dryer of 80°C to 160°C.

As an example of the operation of the granulator, the primary ignition was performed by adjusting the LPG gas pressure in the furnace to 0.1 kg/hr and raising the temperature to 300°C for 30 minutes. After 1 hour, the gas pressure was adjusted to 0.125 kg/hr and the temperature was raised to 500°C for 30 minutes. When the temperature reached 500°C, the gas pressure was adjusted to 0.15 kg/hr and the temperature was raised to 800°C for 1 hour and 30 minutes, and then the burner of the hot stove furnace was ignited and the temperature was raised for 2 hours so that the internal temperature of the furnace reached 800°C. The blower was operated to move the heat into the cyclone when the temperature reached 800°C, the nozzle was introduced into the lower part of the cyclone when the internal temperature reached 500°C, and the fluid colloidal slurry finely ground at a pump pressure of 60 kgf/cm² was pumped up to the upper point.

At this time, the concentration of the slurry is adjusted to 30±5 wt%, the viscosity is adjusted to 500±200 cps, and the size is adjusted to 0.2 mm or less.

The discharged colloidal slurry falls while creating a vortex by the hot air flowing in from the upper side of the cyclone, the moisture contained in the raw material evaporates by the internal heat maintained at 130°C to 400°C, and granules having pores thus formed and a size of 0.3 to 0.4 mm are obtained.

In this process, the moisture contained in the fluid colloidal slurry is rapidly vaporized inside, a hollow is formed inside at this time, a granular layer is formed on the outside thereof, an organic coating layer is formed on the outside thereof, and a porous structure is formed inside the granular layer by the expansion of bubbles due to water evaporation and temperature expansion.

In this process, the fluid colloidal slurry is sprayed into the high-temperature granulator at an instantaneous high pressure, the moisture inside the slurry evaporates, moves to the outside first, and escapes to form pores inside, and a porous granular layer is thus formed.

At this time, organic components such as proteins and fats move outward together with the instantaneous moisture movement to form an organic coating layer, which is a mucous membrane like a protective film having a substantially elliptical or circular cross-sectional shape, is formed around the granular layer.

### 5. Cooling step

The molded granules are cooled.

For cooling, the molded granules may be naturally cooled at room temperature, or the molded granules may be placed in a cooling tank or the like and cooled at a high speed.

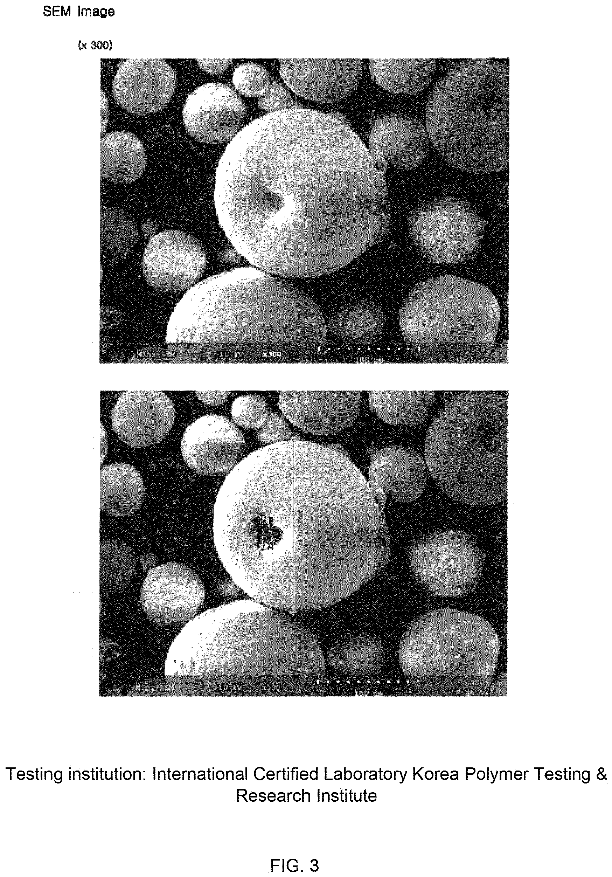

FIG. 3 is a micrograph at 300 magnification of the porous granules for pet feed prepared by the above process using the Macsumsuk and oriental medicine extract of the present invention. It can be seen that the porous granules have an elliptical or circular cross-section, namely, a spherical shape or a curved body shape similar thereto.

In particular, looking at the right side of the largest granule in the micrograph, a threadlike part is observed, and this indicates a fiber since vegetable proteins are mainly contained in the granules. As in the micrograph, it can be seen that the shape of the granules is not easily deformed because of the fibers.

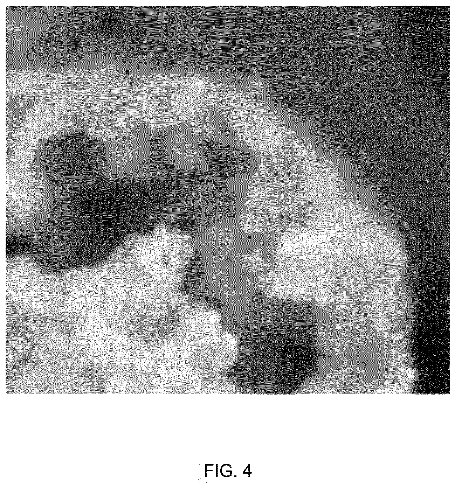

FIG. 4 illustrates the internal structure of such a granule cut. Although the granule is partially crushed by the blade as the small granule is cut, it can be seen that a hollow is formed inside, a porous granular layer is formed on the outside thereof, and an organic coating layer is formed on the outside of the granular layer as illustrated in the figure.

Hereinafter, Examples of the present invention will be described.

### <Example 1>

Macsumsuk raw ore was ground and the powder was heated at a temperature of 800°C to 1,100°C to prepare 100 parts by weight of Macsumsuk power, and
abalone (*Haliotis*) shells were prepared, washed, and then ground, and the powder was heated at the same temperature to prepare 100 parts by weight of shell power.

Subsequently, magnesium was purchased from the market and prepared by 30 parts by weight, and 70 parts by weight of rice bran and 30 parts by weight of rice germ were prepared.

Thereafter, *Glycyrrhiza uralensis, Sophora flavescens,* and *Morus alba* leaf powders were mixed together at a weight ratio of 1:1:2, then water was added in an amount to be 3 times the weight of the mixture, the resultant mixture was heated for 6 hours, and solid matter was removed to prepare an oriental medicine extract, and the oriental medicine extract was weighed to be prepared by 15 parts by weight.

Next, while mixing and stirring the raw materials, small amounts of a dispersant, a pH adjusting agent, and a defoaming agent were added to prepare a fluid colloidal slurry having a concentration of 40 wt%, a pH of 8.0, and a viscosity of 850 cps.

Then, the prepared slurry was pumped up to the top of a granulator having an internal temperature of 300°C at a pump pressure of 60 kgf/cm² to prepare granules having a hollow inside and a porous surface, and the prepared granules were cooled.

### <Example 2>

Granules were prepared in the same manner as in Example 1 except that a fermentation broth was prepared by mixing leaves of *Solanum melongena* with water, blanching the leaves of *Solanum melongena,* separating solid matter to obtain a primary liquid phase, adding leaves of *Youngia japonica* and leaves of *Erigeron annuus* at a weight ratio of 2:1 to the primary liquid phase, performing immersion at room temperature for 120 minutes, separating solid matter to obtain a secondary liquid phase, and fermenting the secondary liquid phase at a low temperature for 40 hours, and this fermentation broth was used to replace water in the preparation of oriental medicine extract.

Hereinafter, Comparative Examples for comparison with Examples will be described.

### <Comparative Example 1>

Granules were prepared in the same manner as in Example 1 except that the shells were not added.

### <Comparative Example 2>

Granules were prepared in the same manner as in Example 1 except that magnesium was not added.

### <Comparative Example 3>

Granules were prepared in the same manner as in Example 1 except that rice bran was not added.

### <Comparative Example 4>

Granules were prepared in the same manner as in Example 1 except that rice germ was not added.

### <Comparative Example 5>

Granules were prepared in the same manner as in Example 1 except that the oriental medicine extract was not added.

Hereinafter, Experimental Examples will be described.

### <Experimental Example 1> Pet preference

The granules of Examples and Comparative Examples were placed in the same place in a dog café, the degree to which 30 dogs approached the granules and the degree to which 30 dogs well ate were measured by a 5-point scoring method, and the results are presented in Table 2.

**[Table 2]**

| | Division | Degree of approach | Degree of eating |
|---|---|---|---|
| | Example 1 | 3.5 | 3.7 |
| | Example 2 | 4.3 | 4.2 |
| 1 | Comparative Example | 3.3 | 2.1 |
| 2 | Comparative Example | 3.3 | 3.3 |
| 3 | Comparative Example | 3.4 | 2.3 |
| 4 | Comparative Example | 3.3 | 1.8 |
| 5 | Comparative Example | 3.3 | 3.3 |

### (5: approach well, eat well, 0: do not approach, do not eat)

### <Experimental Example 2> Dog owner's preference for odor

30 dog owners were randomly recruited and asked to smell the prepared granules of Examples and Comparative Examples immediately after opening and 12 hours after opening, the dog owner's preference for odor was evaluated, and the results are presented in Table 3.

**[Table 3]**

| | Division | Odor immediately after opening | Odor 12 hours after opening |
|---|---|---|---|
| | Example 1 | 3.6 | 3.0 |
| | Example 2 | 3.5 | 3.3 |
| 1 | Comparative Example | 2.2 | 0.7 |
| 2 | Comparative Example | 2.4 | 0.8 |
| 3 | Comparative Example | 2.3 | 1.0 |
| 4 | Comparative Example | 2.1 | 0.9 |
| 5 | Comparative Example | 1.5 | 0.3 |

| | | | |
|---|---|---|---|
| (5: pleasant odor, 0: unpleasant odor) | | | |

As a result of the experiment, it has been found that the granules of Examples do not smell bad as compared to the granules of Comparative Examples.

In particular, when 12 hours had elapsed after opening, the degree of deterioration in odor is severe in the granules of Comparative Examples whereas the degree of deterioration in odor is not significant in the granules of Examples.

According to the present invention, a feed with a decreased odor and high preference is provided by the utilization of Macsumsuk and oriental medicine extracts.

In addition, people living in the same living space as pets hardly smell the unpleasant odor of feed.

It will be apparent to those skilled in the art that various modifications and variations can be made in the present invention without departing from the scope of the invention as defined in the appended claims.

This invention can be implemented in many different forms without departing from technical aspects or main features. Therefore, the implementation examples of this invention are nothing more than simple examples in all respects and will not be interpreted restrictively.

### Industrial Applicability

The present invention can be used for feeding various pets such as dogs and cats, or especially for pet snacks.

## Claims

1. A method for preparing organic coated feed for pets using clay minerals and organic matter, which is a feed preparing method, the method comprising:
a mineral pretreatment step of preparing, grinding, and firing a clay mineral including Macsumsuk to prepare mineral powder;
a shell pretreatment step of preparing, washing, grinding, and firing a shell to prepare shell powder;
a mixing step of preparing magnesium, rice bran, rice germ, and an oriental medicine extract comprising a herbal medicine, mixing the magnesium, rice bran, rice germ, and said oriental medicine extract with the mineral powder and the shell powder, and stirring the resultant mixture to prepare a fluid colloidal slurry;
a molding step of spraying the fluid colloidal slurry prepared in the mixing step into a granulator having an internal temperature of 130°C to 400°C at a high pressure to prepare granules having a hollow inside and a porous surface; and
a cooling step of cooling the molded granules;
wherein said Macsumsuk is a quartz porphyry and has the following composition:
| Component name | Content (wt%) |
|---|---|
| Silicon dioxide (SiO₂) | 65.80 to 71.80 |
| Aluminum oxide (Al₂O₃) | 10.99 to 14.99 |
| Iron oxide (Fe₂O₃) | 2.27 to 2.67 |
| Calcium oxide (CaO) | 1.79 to 2.19 |
| Magnesium oxide (MgO) | 0.46 to 0.66 |
| Potassium oxide (K₂O) | 3.50 to 5.50 |
| Sodium oxide (Na₂O) | 5.25 to 7.25 |
| Titanium dioxide (TiO₂) | 0.21 to 0.25 |
| Phosphorus pentoxide (P₂O₅) | 0.05 to 0.07 |
| Manganese oxide (MnO) | 0.05 to 0.07 |
| Ignition loss | 1.89 to 2.29 |

2. The method for preparing organic coated feed for pets using clay minerals and organic matter according to claim 1, wherein
the mineral powder is prepared by 100 parts by weight,
the shell powder is mixed at 50 to 200 parts by weight with respect to 100 parts by weight of the mineral powder in the mixing step,
magnesium is mixed at 10 to 50 parts by weight with respect to 100 parts by weight of the mineral powder in the mixing step,
rice bran is mixed at 50 to 200 parts by weight with respect to 100 parts by weight of the mineral powder in the mixing step,
rice germ is mixed at 20 to 70 parts by weight with respect to 100 parts by weight of the mineral powder in the mixing step,
the oriental medicine extract is mixed at 10 to 20 parts by weight with respect to 100 parts by weight of the mineral powder in the mixing step.

3. The method for preparing organic coated feed for pets using clay minerals and organic matter according to claim 2,
wherein the fluid colloidal slurry prepared in the mixing step is sprayed into a granulator through a nozzle at an injection pressure of 14.0 to 20.0 kg/cm² to mold granules having an average particle size of 0.1 to 4 mm in the molding step.

4. The method for preparing organic coated feed for pets using clay minerals and organic matter according to claim 3, wherein
the oriental medicine extract is prepared by mixing *Glycyrrhiza uralensis, Sophora flavescens*, and *Morus alba* leaf powders are mixed together at a weight ratio of 1:1:2, then adding water in an amount to be 2 to 3 times the weight of the mixture, heating the resultant mixture for 6 hours, and removing solid matter.

5. The method for preparing organic coated feed for pets using clay minerals and organic matter according to claim 4, wherein
the water added in claim 4 is a fermentation broth prepared through:
a blanching step of mixing leaves of *Solanum melongena* with water, blanching the leaves of *Solanum melongena,* and separating solid matter to obtain a primary liquid phase;
a primary immersion step of adding leaves of *Youngia japonica* and leaves of *Erigeron annuus* to the primary liquid phase, performing immersion at room temperature for 120 minutes, and separating solid matter to obtain a secondary liquid phase; and
a fermentation step of fermenting the secondary liquid phase at a low temperature for 36 to 48 hours to prepare a fermentation broth.

## Patentansprüche

1. Verfahren zur Herstellung von organischem beschichtetem Futter für Haustiere unter Verwendung von Tonmineralien und organischem Material, das ein Futterherstellungsverfahren ist, wobei das Verfahren umfasst:
einen Mineralienvorbehandlungsschritt eines Vorbereitens, Mahlens und Brennens eines Tonminerals, beinhaltend Macsumsuk, um ein Mineralpulver herzustellen;
einen Muschelvorbehandlungsschritt eines Vorbereitens, Mahlens und Brennens einer Muschel, um ein Muschelpulver herzustellen;
einen Mischschritt eines Vorbereitens von Magnesium, Reiskleie, Reiskeim und einem orientalischen Medizinextrakt, umfassend eine Kräutermedizin, Mischens des Magnesiums, der Reiskleie, des Reiskeims und des orientalischen Medizinextrakts mit dem Mineralpulver und dem Muschelpulver und Rührens des resultierenden Gemischs, um eine flüssige kolloidale Suspension herzustellen;
einen Formungsschritt eines Spritzens der in dem Mischschritt hergestellten flüssigen kolloidalen Suspension in einen Granulierer mit einer Innentemperatur von 130 °C bis 400 °C bei einem hohen Druck, um Granulat mit einem hohlen Inneren und einer porösen Oberfläche herzustellen; und
einen Kühlschritt eines Kühlens des geformten Granulats;
wobei das Macsumsuk ein Quarzporphyr ist und die folgende Zusammensetzung aufweist:
| Komponentenname | Gehalt (Gew.-%) |
|---|---|
| Siliciumdioxid (SiO₂) | 65,80 bis 71,80 |
| Aluminiumoxid (Al₂O₃) | 10,99 bis 14,99 |
| Eisenoxid (Fe₂O₃) | 2,27 bis 2,67 |
| Calciumoxid (CaO) | 1,79 bis 2,19 |
| Magnesiumoxid (MgO) | 0,46 bis 0,66 |
| Kaliumoxid (K₂O) | 3,50 bis 5,50 |
| Natriumoxid (Na₂O) | 5,25 bis 7,25 |
| Titandioxid (TiO₂) | 0,21 bis 0,25 |
| Phosphorpentoxid (P₂O₅) | 0,05 bis 0,07 |
| Manganoxid (MnO) | 0,05 bis 0,07 |
| Glühverlust | 1,89 bis 2,29 |

2. Verfahren zur Herstellung von organischem beschichtetem Futter für Haustiere unter Verwendung von Tonmineralien und organischem Material nach Anspruch 1, wobei
das Mineralpulver zu 100 Gewichtsteilen hergestellt wird,
das Muschelpulver in dem Mischschritt zu 50 bis 200 Gewichtsteilen bezogen auf 100 Gewichtsteile des Mineralpulvers gemischt wird,
Magnesium in dem Mischschritt zu 10 bis 50 Gewichtsteilen bezogen auf 100 Gewichtsteile des Mineralpulvers gemischt wird,
Reiskleie in dem Mischschritt zu 50 bis 200 Gewichtsteilen bezogen auf 100 Gewichtsteile des Mineralpulvers gemischt wird,
Reiskeim in dem Mischschritt zu 20 bis 70 Gewichtsteilen bezogen auf 100 Gewichtsteile des Mineralpulvers gemischt wird,
der orientalische Medizinextrakt in dem Mischschritt zu 10 bis 20 Gewichtsteilen bezogen auf 100 Gewichtsteile des Mineralpulvers gemischt wird.

3. Verfahren zur Herstellung von organischem beschichtetem Futter für Haustiere unter Verwendung von Tonmineralien und organischem Material nach Anspruch 2,
wobei die in dem Mischschritt hergestellte flüssige kolloidale Suspension in einen Granulierer durch eine Düse bei einem Spritzdruck von 14,0 bis 20,0 kg/cm² gespritzt wird, um in dem Formungsschritt Granulat mit einer durchschnittlichen Teilchengröße von 0,1 bis 4 mm zu formen.

4. Verfahren zur Herstellung von organischem beschichtetem Futter für Haustiere unter Verwendung von Tonmineralien und organischem Material nach Anspruch 3, wobei
der orientalische Medizinextrakt durch Mischen von *Glycyrrhizauralensis-*, *Sophora-flavescens*- und *Morus-alba*-Blattpulvern, die in einem Gewichtsverhältnis von 1:1:2 zusammen gemischt werden, dann Zugeben von Wasser in einer Menge, die das 2- bis 3-fache des Gewichts des Gemischs sein soll, Erhitzen des resultierenden Gemischs für 6 Stunden und Entfernen von festem Material hergestellt wird.

5. Verfahren zur Herstellung von organischem beschichtetem Futter für Haustiere unter Verwendung von Tonmineralien und organischem Material nach Anspruch 4, wobei
das in Anspruch 4 zugegebene Wasser eine Fermentationsbrühe ist, hergestellt durch:
einen Bleichungsschritt eines Mischens von Blättern von *Solanum melongena* mit Wasser, Bleichens der Blätter von *Solanum melongena* und Trennens von festem Material, um eine primäre Flüssigphase zu erhalten;
einen primären Eintauchschritt eines Zugebens von Blättern von *Youngia japonica* und Blättern von *Erigeron annuus* zu der primären Flüssigphase, Durchführens eines Eintauchens bei Raumtemperatur für 120 Minuten und Trennens von festem Material, um eine sekundäre Flüssigphase zu erhalten; und
einen Fermentationsschritt eines Fermentierens der sekundären Flüssigphase bei einer niedrigen Temperatur für 36 bis 48 Stunden, um eine Fermentationsbrühe herzustellen.

## Revendications

1. Procédé de préparation d'aliments organiques enrobés pour animaux de compagnie utilisant des minéraux argileux et de la matière organique, qui est un procédé de préparation d'aliments, le procédé comprenant :
une étape de prétraitement de minéral de préparation, broyage et cuisson d'un minéral argileux incluant du Macsumsuk pour préparer de la poudre minérale ;
une étape de prétraitement de coquille de préparation, lavage, broyage et cuisson d'une coquille pour préparer de la poudre de coquille ;
une étape de mélange de préparation de magnésium, d'issues de riz, de germe de riz et d'un extrait de médecine orientale comprenant un produit de phytothérapie, de mélange du magnésium, des issues de riz, du germe de riz et dudit extrait de médecine orientale à la poudre minérale et la poudre de coquille, et d'agitation du mélange résultant pour préparer une suspension colloïdale fluide ;
une étape de moulage de pulvérisation de la suspension colloïdale fluide préparée à l'étape de mélange dans un granulateur ayant une température interne de 130 °C à 400 °C à une pression élevée pour préparer des granules ayant un intérieur creux et une surface poreuse ; et
une étape de refroidissement des granules moulés ;
dans lequel ledit Macsumsuk est un porphyre de quartz et a la composition suivante :
| Nom du composant | Teneur (% en poids) |
|---|---|
| Dioxyde de silicium (SiO₂) | 65,80 à 71,80 |
| Oxyde d'aluminium (Al₂O₃) | 10,99 à 14,99 |
| Oxyde de fer (Fe₂O₃) | 2,27 à 2,67 |
| Oxyde de calcium (CaO) | 1,79 à 2,19 |
| Oxyde de magnésium (MgO) | 0,46 à 0,66 |
| Oxyde de potassium (K₂O) | 3,50 à 5,50 |
| Oxyde de sodium (Na₂O) | 5,25 à 7,25 |
| Dioxyde de titane (TO₂) | 0,21 à 0,25 |
| Pentoxyde de phosphore (P₂O₅) | 0,05 à 0,07 |
| Oxyde de manganèse (MnO) | 0,05 à 0,07 |
| Perte au feu | 1,89 à 2,29 |

2. Procédé de préparation d'aliments organiques enrobés pour animaux de compagnie utilisant des minéraux argileux et de la matière organique selon la revendication 1, dans lequel
la poudre minérale est préparée par 100 parties en poids,
la poudre de coquille est mélangée à 50 à 200 parties en poids par rapport à 100 parties en poids de la poudre minérale à l'étape de mélange,
du magnésium est mélangé à 10 à 50 parties en poids par rapport à 100 parties en poids de la poudre minérale à l'étape de mélange,
des issues de riz sont mélangées à 50 à 200 parties en poids par rapport à 100 parties en poids de la poudre minérale à l'étape de mélange,
du germe de riz est mélangé à 20 à 70 parties en poids par rapport à 100 parties en poids de la poudre minérale à l'étape de mélange,
l'extrait de médecine orientale est mélangé à 10 à 20 parties en poids par rapport à 100 parties en poids de la poudre minérale à l'étape de mélange.

3. Procédé de préparation d'aliments organiques enrobés pour animaux de compagnie utilisant des minéraux argileux et de la matière organique selon la revendication 2,
dans lequel la suspension colloïdale fluide préparée à l'étape de mélange est pulvérisée dans un granulateur à travers une buse à une pression d'injection de 14,0 à 20,0 kg/cm² pour mouler des granules ayant une taille particulaire moyenne de 0,1 à 4 mm à l'étape de moulage.

4. Procédé de préparation d'aliments organiques enrobés pour animaux de compagnie utilisant des minéraux argileux et de la matière organique selon la revendication 3, dans lequel
l'extrait de médecine orientale est préparé en mélangeant des poudres de feuille de *Glycyrrhiza uralensis, Sophora flavescens* et *Morus alba* sont mélangées ensemble à un rapport pondéral de 1/1/2, puis ajoutant de l'eau en une quantité devant être de 2 à 3 fois le poids du mélange, chauffant le mélange résultant pendant 6 heures et éliminant la matière solide.

5. Procédé de préparation d'aliments organiques enrobés pour animaux de compagnie utilisant des minéraux argileux et de la matière organique selon la revendication 4, dans lequel
l'eau ajoutée à la revendication 4 est un bouillon de fermentation préparé par :
une étape de blanchiment de mélange de feuilles de *Solanum melongena* à de l'eau, de blanchiment des feuilles de *Solanum melongena* et de séparation de la matière solide pour obtenir une phase liquide primaire ;
une étape d'immersion primaire d'ajout de feuilles de *Youngia japonica* et de feuilles de *Erigeron annuus* à la phase liquide primaire, de réalisation d'une immersion à température ambiante pendant 120 minutes et de séparation de la matière solide pour obtenir une phase liquide secondaire ; et
une étape de fermentation de la phase liquide secondaire à une basse température pendant 36 à 48 heures pour préparer un bouillon de fermentation.
